# EUROPEAN PATENT SPECIFICATION

(11) **EP 3 533 704 B1**
(45) Date of publication and mention of the grant of the patent: **27.09.2023**
(21) Application number: 17865355.6
(22) Date of filing: 14.08.2017
(51) Int. Cl.: B63H 21/38, H02K 5/20, H02K 1/18, F01P 3/20, B63H 20/00, B63H 20/28, B63H 21/17

(54) **SHIP PROPELLER**
SCHIFFSPROPELLER
PROPULSEUR DE NAVIRE

(30) Priority: 26.10.2016 CN 201610951486
(43) Date of publication of application: 04.09.2019
(73) Proprietor: Guangdong ePropulsion Technology Limited, Dongguan, 523808 Guangdong Province (CN)
(72) Inventor: LI, Guang, Dongguan Guangdong 523808 (CN); WAN, Xiaokang, Dongguan Guangdong 523808 (CN); TAO, Shizheng, Dongguan Guangdong 523808 (CN); TANG, Xuefeng, Dongguan Guangdong 523808 (CN); ZHANG, Yichi, Dongguan Guangdong 523808 (CN)
(74) Representative: Hermann, Felix
(86) International application number: PCT/CN2017/097385
(87) International publication number: WO 2018/076896

(56) References cited:
- CN-A- 101 586 564
- CN-A- 104 369 853
- CN-A- 105 377 693
- CN-A- 106 516 064
- CN-A- 106 542 073
- CN-U- 202 172 317
- CN-U- 206 117 392
- JP-A- 2005 162 055
- JP-B2- 4 337 522
- US-A- 4 764 135
- US-A1- 2002 146 946
- US-A1- 2005 116 553
- US-A1- 2015 017 033
- US-A1- 2015 232 163
- US-A1- 2015 295 473

## Description

### FIELD

The subject matter herein generally relates to ship propulsion apparatus.

### BACKGROUND

A ship propulsion apparatus is usually used in a powerboat, a rubber boat, a sailboat, or the like. The ship propulsion apparatus mainly employs an engine or an electric motor to be a power device. No matter which power device is employed by the ship propulsion apparatus, the power device or other components will generate heat when the ship propulsion apparatus is working. If the heat is not discharged timely, the temperature of the power device or other element may increase, which may influences the performance of the ship propulsion apparatus, even may cause damage to the ship propulsion apparatus, thus the ship propulsion apparatus cannot be used again.

JP 2005-162055 A addresses the problem of how to provide a compact electric outboard motor to be substituted for a high-output gasoline engine. As solution, it is suggested: An outboard motor is divided into three portions in the vertical direction, and an upper and a lower parts of a middle unit positioning in an intermediate portion are fitted to a hull through mounting devices. The outboard motor is provided with an electric motor, a battery for supplying power to the electric motor and a control unit for controlling rotating speed of the electric motor. The electric motor is arranged inside a middle case structuring the middle unit between the mounting devices.

US 2002/146946 A1 discloses an outboard motor that includes an engine and a housing unit mounted on an associated watercraft. An intermediate unit is coupled with the housing unit to support the engine above the housing unit. An exhaust conduit discharging exhaust gases from the engine depends from the intermediate unit to extend generally vertically within the housing unit. The intermediate unit defines a coolant passage having a discharge port spaced apart from an outer surface of the exhaust conduit. A guide member is arranged to guide the coolant discharged from the discharge port toward the outer surface of the exhaust conduit.

US 2005/116553 A1 discloses: A cooling device for an internal stator of an electric machine. The stator includes a substantially cylindrical cavity having a substantially cylindrical internal surface. The cooling device includes a body defining an external substantially cylindrical contact surface. The cooling device further includes a biasing element connected to the body. The biasing element is so configured and sized as to bias the contact surface of the body against the internal surface of the rotor when the cooling device is positioned inside the cavity.

US 2015/017033 A1 discloses a ship's propulsion unit including a shell structure arranged below a hull of the ship and an electric motor for rotating a propeller. The propulsion unit can include a closed gas circulation cooling system containing gas and include a gas circulation device for circulating gas through channels in the electric motor, a closed liquid cooling system having an inner space containing liquid, and a gas-liquid-heat exchanger in fluid connection with the closed gas circulation cooling system and with the closed liquid cooling system for exchanging thermal energy between gas circulating in the closed gas circulation cooling system and liquid in the closed liquid cooling system.

US 2015/232163 A1 discloses a cooling system and method. A coolant line is in thermal contact with an electric motor of a boat drive. Coolant is pump able by a pump through the coolant line. The coolant line is in thermal contact with a component that is spatially separate from the boat drive. The coolant line has a first line section which is in thermal contact with the electric motor, a second line section which is in thermal contact with the component, and the first line section is detachably connectable to the second line section.

US 4,764,13 5 A discloses that in a marine stem drive unit, oil is circulated upwardly from the propeller housing and through the drive shaft sleeve to the upper gear case. A return oil line connects from the upper gear case and downwardly through the lower gear case to the propeller housing. The return line is disposed within a cooling water chamber communicating with the drive engine to create an intercooling or heat exchanging effect whereby the incoming water from a lake or the like cools the recirculating stern drive unit lubricant. A combination of threaded drive shaft and internally grooved sleeve is utilized to pump the oil through the system.

JP 4 337522 B2 discloses an electric outboard motor that includes a support portion for supporting the outboard motor on the hull, and a motor cover above the support portion covering a motor room formed by an electric motor in the motor room. The outboard motor further includes a battery for supplying electric power to the electric motor, and a control unit for controlling the electric motor is provided, on the periphery of the electric motor. In addition to forming an oil jacket, an oil tank and an oil pump are arranged in the lower case or extension case below the motor room, the oil jacket and the oil tank are connected, and cooling oil is circulated by the oil pump.

### SUMMARY OF THE INVENTION

The present disclosure provides a ship propulsion apparatus with a cooling structure. The invention is defined by the subject matter of independent claim 1.

In one embodiment, the fluid circuit circulates through the power device.

In one embodiment, the power device drives the pump.

In one embodiment, the pump includes a pump driver

In one embodiment, the pump communicates with the coolant supply in series.

In one embodiment, the coolant passage extends along a longitudinal axis of the supporting rod.

In one embodiment, the coolant passage is smooth transition at an end of the coolant passage in the supporting rod away from the pump.

In one embodiment, the ship propulsion apparatus furthers include a driver and a battery. The fluid circuit circulate through the driver and the battery. The battery include a built-in battery management system (BMS).

In one embodiment, an end surface of the supporting rod defines two interconnected communication holes. The two interconnected communication holes communicate with the coolant passage.

In one embodiment, the ship propulsion apparatus further includes a housing. The housing defines a receiving space to receive the supporting rod. The housing defines a plurality of water inlets communicating with the receiving space.

In one embodiment, the cross-section of the housing or the supporting rod is teardrop shape, streamlined shape, or circular.

In one embodiment, the coolant passage is smooth transition at an end of the coolant passage.

In one embodiment, the ship propulsion apparatus further includes the housing arranged at a side of the pump. The coolant passage is arranged in the housing and is a part of the fluid circuit.

According to the invention, the pump defines two passageways. The two passageways communicate with the coolant passage in the housing. One of the two passageways circulates through the drive gear and the driven gear.

In one embodiment, the power device includes a stator, a rotor cooperating with the stator, a heat sink, a first end cover, and a second end cover. The heat sink is arranged in the stator. The first end cover and the second end cover are arranged at two ends of the heat sink respectively. The heat sink defines a plurality of coolant passages. The first end cover defines a plurality of first communicating slots communicating with the coolant passages, and the second end cover defines a plurality of second communicating slots communicating with the coolant passages. The first end cover or the second end cover defines a fluid inlet and/or a fluid outlet. The fluid inlet and the fluid outlet both communicate with at least one coolant passages.

In one embodiment, the coolant passages are straight or spiral.

According to the invention, the ship propulsion apparatus further includes a supporting rod. The fluid circuit circulates through the supporting rod.

According to the invention, the supporting rod defines a coolant passage which communicates with the pump in series.

In one embodiment, the coolant passage extends along a longitudinal axis of the supporting rod.

In one embodiment, the coolant passage is smooth transition at an end of the coolant passage in the supporting rod away from the pump.

In one embodiment, the ship propulsion apparatus furthers include a driver and a battery. The fluid circuit circulate through the driver and the battery. The battery include a built-in battery management system (BMS).

According to the invention, the coolant passage is formed in the supporting rod. The coolant passage is a part of the fluid circuit.

In one embodiment, an end surface of the supporting rod defines two interconnected communication holes. The two interconnected communication holes communicate with the coolant passage.

In one embodiment, the ship propulsion apparatus further includes a housing. The housing defines a receiving space to receive the supporting rod. The housing defines a plurality of water inlets communicating with the receiving space.

In one embodiment, the cross-section of the housing or the supporting rod is teardrop shape, streamlined shape, or circular.

According to the invention, the pump includes a first end cover, a second end cover, and the drive gear and the driven gear received between the first end cover and the second end cover. The drive gear and the driven gear engage with each other. The fluid circuit circulates through the drive gear and the driven gear.

According to the invention, the pump defines two passageways. The two passageways communicate with the coolant passage in the supporting rod. One of the two coolant passages circulates through the drive gear and the driven gear.

In one embodiment, the coolant passage is smooth transition at an end of the coolant passage.

In one embodiment, the ship propulsion apparatus further includes the housing arranged at a side of the pump. The coolant passage is arranged in the housing and is a part of the fluid circuit.

According to the invention, the pump includes a first end cover, a second end cover, and a drive gear and a driven gear received between the first end cover and the second end cover. The drive gear is engaged with the driven gear. The fluid circuit circulates through the drive gear and the driven gear.

According to the invention, the pump defines two passageways. The two passageways communicate with the coolant passage in the housing. One of the two passageways circulates through the drive gear and the driven gear.

In one embodiment, the power device includes a stator, a rotor cooperating with the stator, a heat sink, a first end cover, and a second end cover. The heat sink is arranged in the stator. The first end cover and the second end cover are arranged at two ends of the heat sink respectively. The heat sink defines a plurality of coolant passages. The first end cover defines a plurality of first communicating slots communicating with the coolant passages, and the second end cover defines a plurality of second communicating slots communicating with the coolant passages. The first end cover or the second end cover defines a fluid inlet and/or a fluid outlet. The fluid inlet and the fluid outlet both communicate with at least one coolant passages.

In one embodiment, the coolant passages are straight or spiral.

In one embodiment, the first communicating slots and the second communicating slots are formed by smoothed inward transition concaving.

In one embodiment, the stator includes a magnetic core and a plurality of coils winding around the magnetic core. The heat sink is arranged in the magnetic core.

In one embodiment, a sealing pad or a sealing grease is arranged between the heat sink and the first end cover and/or the heat sink and the second end cover.

The above ship propulsion apparatus drives the coolant flowing in the fluid circuit to dissipate heat from the ship propulsion apparatus because the ship propulsion apparatus defines a closed fluid circulation circuit in the ship propulsion apparatus. Moreover, because the ship propulsion apparatus is designed to be closed circulation cooling, the ship propulsion apparatus doesn't need to obtain coolant from external water, contamination because of the external water and blockages because of the impurity of the external water are thus avoided. Thus, water to wash away the corrosive fluid or clearing up the blocking from the ship propulsion apparatus is not needed any more. The cost for maintaining the ship propulsion apparatus reduces while the service life of the ship propulsion apparatus increase.

### BRIEF DESCRIPTION OF THE DRAWINGS

FIG. 1 is a schematic view of a first embodiment of a ship propulsion apparatus.
FIG. 2 is a cross-sectional view of a supporting rod of the ship propulsion apparatus of FIG. 1, taken along line II-II.
FIG. 3 is a plan view of the ship propulsion apparatus of FIG. 1.
FIG. 4 is a schematic view of a second embodiment of a ship propulsion apparatus.
FIG. 5 is a schematic view of a third embodiment of a ship propulsion apparatus.
FIG. 6 is a schematic view of a fourth embodiment of a ship propulsion apparatus.
FIG. 7 is a schematic view of a fifth embodiment of a ship propulsion apparatus.
FIG. 8 is an exploded view of a sixth embodiment of a ship propulsion apparatus.
FIG. 9 is similar to FIG. 8, but viewed from another perspective.
FIG. 10 is an exploded view of a power device of the ship propulsion apparatus of FIG. 8.
FIG. 11 is a view of a heat sink, a first end cover, and a second end cover of the power device assembled together.
FIG. 12 is a bottom view of the power device of FIG. 11.
FIG. 13 is a cross-sectional view of the power device of FIG. 11, taken along line VI-VI.
FIG. 14 is a schematic view of a second end cover of a pump of the ship propulsion apparatus of FIG. 8.
FIG. 15 is a partially enlarged view of a portion of a bushing of the ship propulsion apparatus of FIG. 8.
FIG. 16 is a cross-sectional view of the bushing of FIG. 15, taken along line IX-IX.
FIG. 17 is a cross-sectional view of a part of structure of the ship propulsion apparatus of FIG. 8.

### DETAILED DESCRIPTION

Clear and complete description will be made to technical schemes of the present disclosure in conjunction with corresponding drawings in the embodiment of the present disclosure. Obviously, the described embodiments are merely a part of the embodiments of the present disclosure and not all the embodiments. Based on the embodiments of the present disclosure, all other embodiments obtained by those ordinarily skilled in the art without paying creative work fall within the protection scope of the present disclosure.

When one component is considered to "couple" another component, it may be directly connected to the other component or it is possible that there is a third component between them.

Unless otherwise defined, all the technical and scientific terms used in this specification convey the same meanings as the meanings commonly understood by a person skilled in the art. Additionally, the terms used in the specification the present disclosure are merely for describing the objective of the specific embodiments, and are not intended to limit the present disclosure. The term "and/or," includes any and all combinations of one or more of the associated listed items.

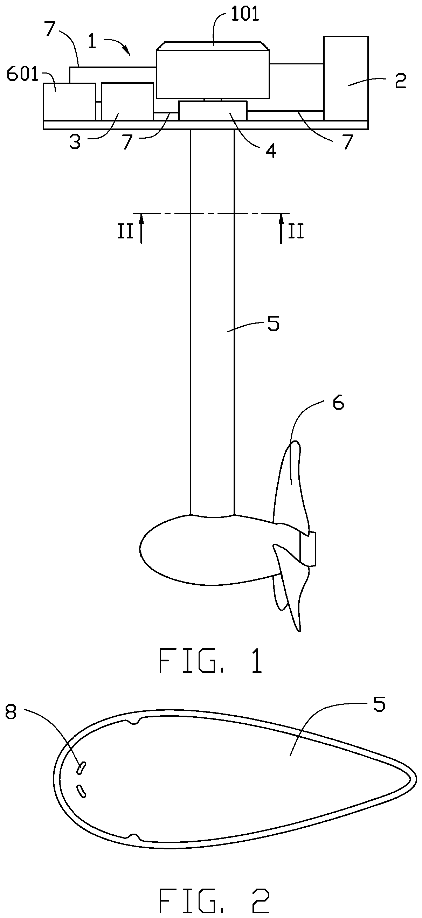

A pump of a ship propulsion apparatus circulates coolant in a closed fluid circuit. Thus the ship propulsion apparatus exchanges heat with an external environment, and one or more components circulated through by the closed fluid circuit are cooled. Referring to FIG. 1 to FIG. 3, a first embodiment provides a ship propulsion apparatus 1. The ship propulsion apparatus 1 includes a power device 101, a coolant supply 2, a driver 3, a battery 601, a pump 4, a supporting rod 5, a propeller 6, and a plurality of water pipes 7. A fluid circuit for circulation of fluid in a closed loop is formed in the ship propulsion apparatus 1. The fluid in the fluid circuit is driven by the pump 4 to circulate. The coolant supply 2 provides the fluid circulating in the fluid circuit. The fluid is gas or liquid for cooling. In the embodiment, the coolant supply 2 is a water tank. The supporting rod 5 is configured to act for supporting. The cross-section of the supporting rod 5 is teardrop shape, streamlined shape, or circular. The power device 101, the driver 3, and the battery 601 are main components of the ship propulsion apparatus 1. The battery 601 includes a built-in BMS. The power device 101 is an electric motor, an engine, or the like. The pump 4 is a pump driven by the power device 101, or includes a pump driver. The pump 4 is a pump capable of forward and reversely working. Namely, the pump 4 is compatible with different power devices, such as the electric motor, the engine, or the like. When the pump 4 rotates in a forward direction or rotates in a reverse direction, the coolant circulates in a corresponding direction. When the pump 4 includes a pump driver, after supplying power for the pump, the pump immediately begins to work independently. The pump 4 is a gear pump. The pump 4 includes a drive gear 91 and a driven gear 92 engaged with the drive gear 91. The fluid circuit circulates through the drive gear 91 and the driven gear 92. In other embodiments, the pump 4 is not limited to the gear pump. The main components are not limited to the power device 101, the driver 3, and the battery 601 of the embodiment.

The fluid circuit circulates through the components needing to be cooled, to bring the heat from the components circulated through. In the embodiment, the coolant supply 2 and the power device 101, the power device 101 and the battery 601, the battery 601 and the driver 3, the driver 3 and the pump 4, and the pump 4 and the coolant supply 2 communicate in series by water pipes 7. The pump 4 communicates with a coolant passage in the supporting rod 5. In an alternative embodiment, the communication between each component is not limited to communication in series by water pipes, for example, when some components are not independent components, those components communicate with each other via defining passages in the components. The coolant supply 2 is an independent component or is integrated with other component. In other embodiments, the component needing to be cooled, for example the driver, directly or indirectly, such as by other passages, communicates with the coolant passage in the supporting rod 5. One passageway for coolant circulating is formed in the pump 4.

In the embodiment, the fluid circuit circulates through the driver 3, the power device 101, the battery 601, and the supporting rod 5. The supporting rod 5 defines the coolant passage 8 extending along a longitudinal axis of the supporting rod 5. The coolant passage 8 is a part of the fluid circuit. In the embodiment, the power device 101, the coolant supply 2, the battery 601, the pump 4, and the driver 3 communicate in series via water pipes 7, and the pump 4 communicates with the coolant passage 8 in the supporting rod 5, thus a communication in series between each component is formed. When the ship propulsion apparatus 1 is working, the supporting rod 5 is partly immersed in the water, the coolant passage 8 in the supporting rod 5 is also partly immersed in the water. The coolant in the coolant passage 8 exchanges heat with water of an external environment, thus the heat of the ship propulsion apparatus 1 is dissipated to the external environment, and the temperature of the coolant in the coolant passage 8 is accordingly reduced. The coolant with reduced temperature is circulated to other components of the fluid circuit, to cool the other components circulated through.

According to the different ship propulsion apparatuses or the different applications of the ship propulsion apparatus, different components are arranged to be cooled. The components needing to be cooled are not limited to the aforementioned power device 101, the aforementioned driver 3, and the aforementioned battery 601, the components needing to be cooled are, for example, the power device, the driver, the circuit board, the battery, or one or more other electronic components.

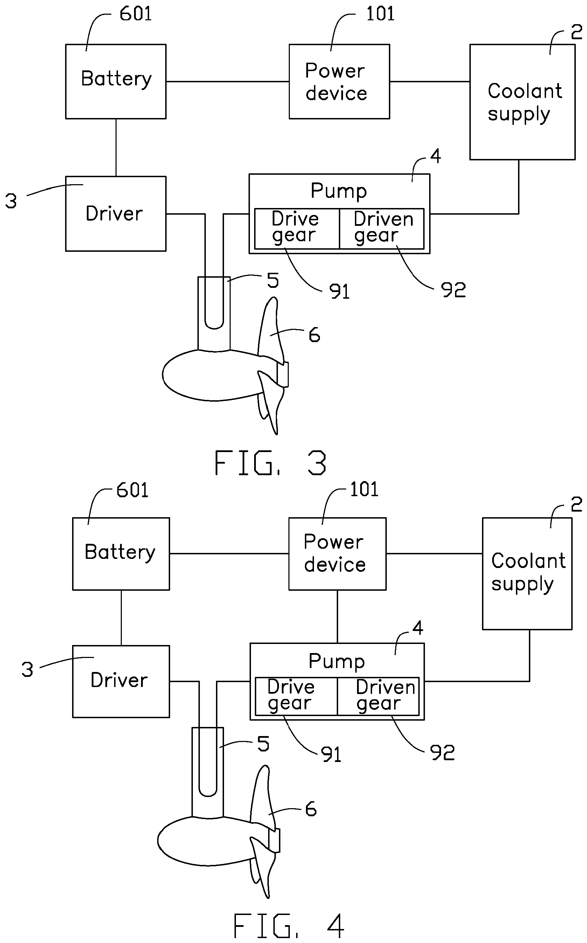

Referring to FIG. 4, a ship propulsion apparatus of a second embodiment is provided. The difference between the ship propulsion apparatus of the second embodiment and the ship propulsion apparatus of the first embodiment is that the pump of the first embodiment includes a pump driver, and the pump of the second embodiment is a pump 4 driven by the power device 101.

In an alternative embodiment, the arrangement of each component and the communication relationship between each component are not limited to this embodiment, for example the power device 101 and the coolant supply 2 are indirectly coupled with each other, other components needing to be cooled, for example a circuit board, a driver, a battery, or the like, are arranged between the power device 101 and the coolant supply 2.

In an alternative embodiment, the manner of exchanging the heat is not limited to part immersion of the fluid circuit in the water, for example the manner of exchanging the heat is complete immersion of the fluid circuit in the water.

In an alternative embodiment, the manner of exchanging the heat is not limited to part immersion of the fluid circuit in the water, for example the manner of exchanging the heat is to arrange one or more fans outside the fluid circuit, and the coolant in the fluid circuit is cooled via an air-cooling manner. The position of the one or more fans is not limited to the specific position, for example the one or more fans are arranged on a top of the fluid circuit. In the embodiment, a structure of arranging a passage in the supporting rod is omitted when the manner of exchanging the heat is to employ the one or more fans to cool the fluid circuit.

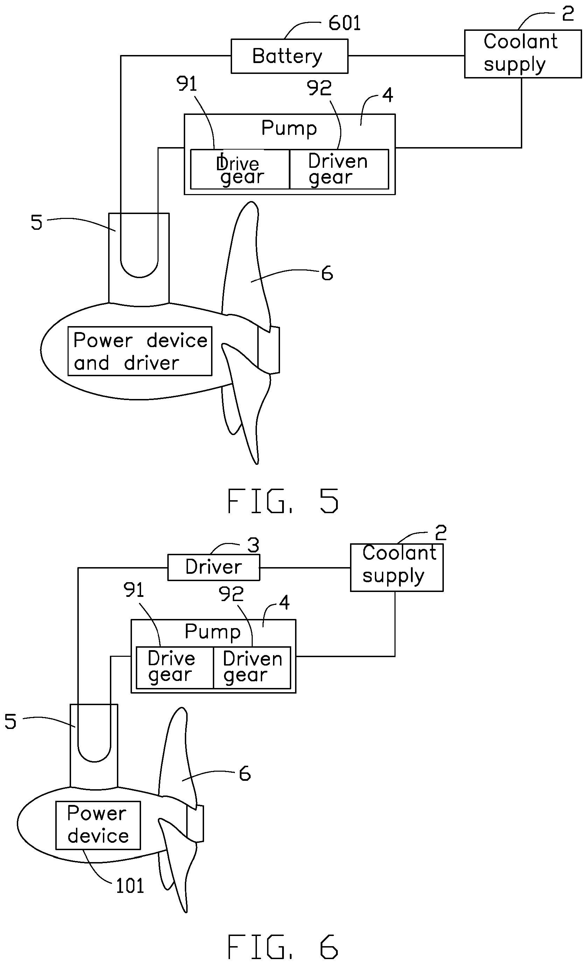

In an alternative embodiment, the power device and the driver are arranged in an end of the ship propulsion apparatus adjacent to the propeller. The power device and the driver are configured to drive the propeller and/or the pump. Thus the fluid circuit cannot circulate through the power device and the driver. Referring to FIG. 5, a power device and a driver of a ship propulsion apparatus of a third embodiment are arranged adjacent to the propeller 6, and the fluid circuit cannot circulate through the power device and the driver. In the embodiment, the power device is an electric motor.

In an alternative embodiment, the power supply is arranged in an end of the ship propulsion apparatus adjacent to the propeller. The power supply is configured to drive the propeller and/or the pump. Thus the fluid circuit cannot circulate through the power device. Referring to FIG. 6, a power device of a ship propulsion apparatus of a fourth embodiment is arranged adjacent to the propeller 6, and the fluid circuit does not circulate through the power device and the battery no matter the ship propulsion apparatus includes the battery or not. In the embodiment, the ship propulsion apparatus includes the battery, but the fluid circuit does not circulate through the battery.

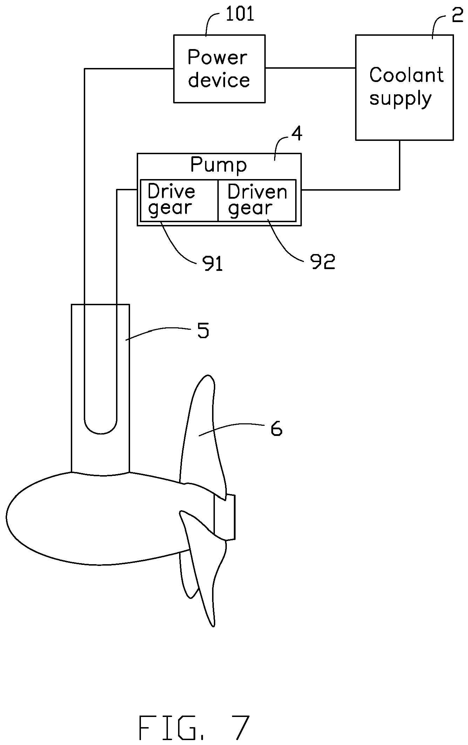

In an alternative embodiment, the fluid circuit does not circulate through the driver. Referring to FIG. 7, a fluid circuit of a ship propulsion apparatus of a fifth embodiment circulates through the power device 101, the supporting rod 5, the pump 4, and the coolant supply 2, and does not circulate through the driver no matter the ship propulsion apparatus includes the driver or not. In the embodiment, the power device 101 is an engine, and the ship propulsion apparatus does not include a driver.

In other embodiments, the ship propulsion apparatus 1 is not limited to be a ship propulsion apparatus with a propeller. Namely, the aforementioned structure of the fluid circuit is applied in the ship propulsion apparatus 1 with different manners of propulsion, for example, a jet propulsion apparatus.

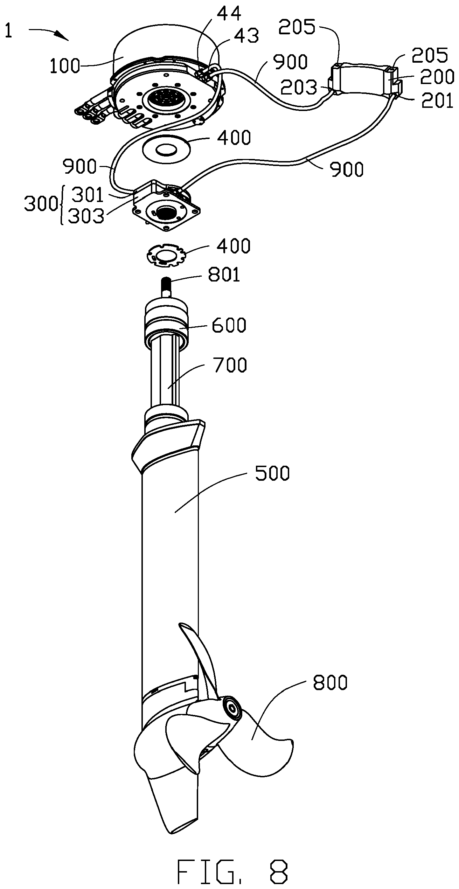

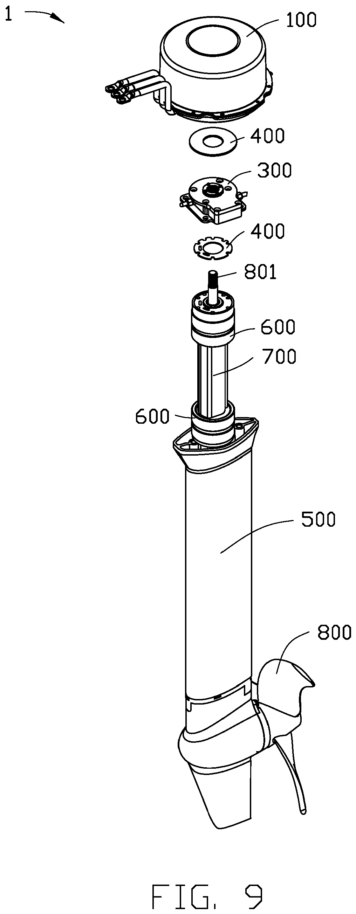

Referring to FIG. 8 and Fig. 9, a sixth embodiment provides a ship propulsion apparatus 1. The ship propulsion apparatus 1 includes a power device 100, a coolant supply 200, a pump 300, one or more sealing members 400, a housing 500, one or more bushings 600, a supporting rod 700, a propeller 800, and a plurality of water pipes 900. The coolant supply 200 is arranged at one side of the power device 100. The coolant supply 200 is configured to provide coolant for cooling the ship propulsion apparatus 1. The pump 300 is arranged below the power device 100. The coolant supply 200 communicates with the pump 300 by a water pipe 900, and the coolant supply 200 communicates with the power device 100 via another water pipe 900. Thus the coolant circulates among the power device 100, the coolant supply 200, and the pump 300. The one or more sealing members 400 are arranged between the power device 100 and the pump 300, and/or between the pump 300 and the supporting rod 700. The one or more sealing members 400 are configured to prevent a leak of the coolant. The supporting rod 700 is below the pump 300, and communicates with the pump 300, thus the coolant circulates in the pump 300 and the supporting rod 700. The one or more bushings 600 are sleeved on the supporting rod 700. The housing 500 is sleeved on the one or more bushings 600 and the supporting rod 700, and support the power device 100 and the pump 300. The propeller 800 is below the housing 500 and is driven by the power device 100 to rotate. In the embodiment, the ship propulsion apparatus 1 is an electric outboard motor, the power device 100 is an electric motor, and the coolant supply 200 is a water tank. Each component is further described in detail as following.

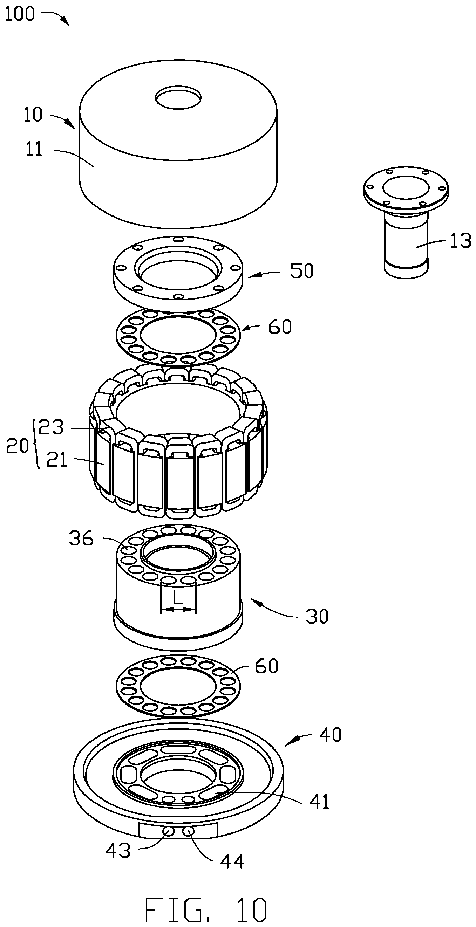

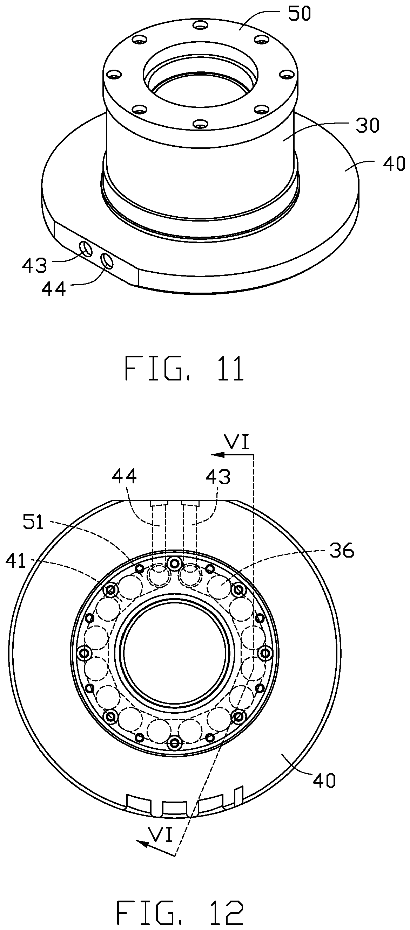

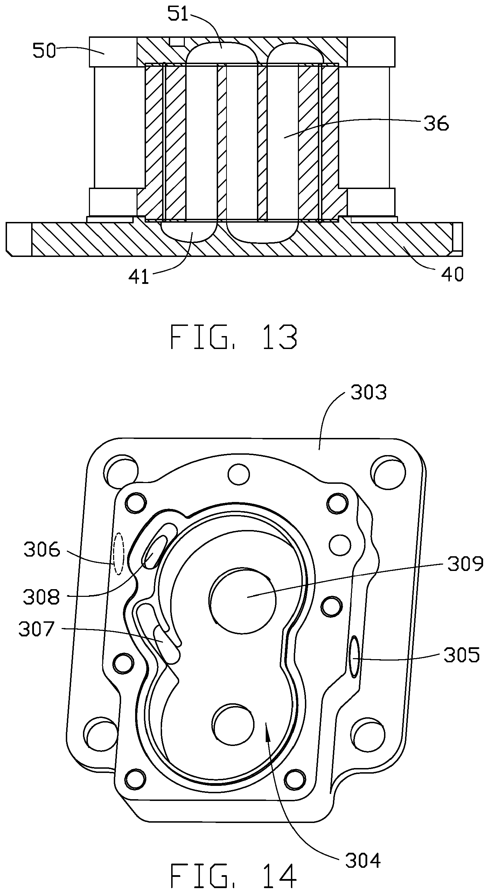

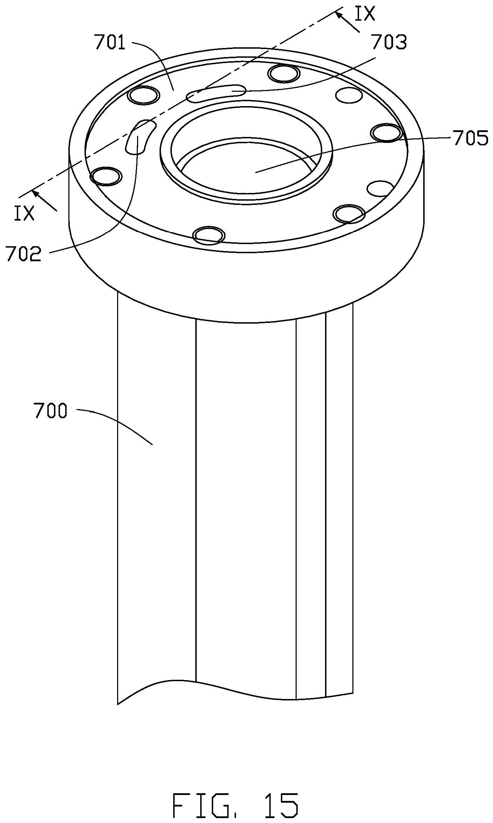

Referring to Fig. 10 to FIG. 17, the power device 100 of the embodiment includes a rotor 10, a stator 20, a heat sink 30, a first end cover 40, a second end cover 50, and two sealing pads 60. In the embodiment, the power device 100 is an external rotor motor. The rotor 10 includes a casing 11, a plurality of magnets (not shown) received in the casing 11, and a rotary shaft 13. The rotary shaft 13 passes through an end wall of the casing 11 and is inserted into the heat sink 30. A central axis of the rotary shaft 13 coincides with a central axis of the power device 100. The stator 20 is received in the rotor 10, and the stator 20 is sleeved on the heat sink 30. The stator 20 includes a magnetic core 21 and a plurality of coils 23 winding around the magnetic core 21. The coils 23 generate magnetic field at an effect of an electric power, and the rotor 10 interacts with the magnetic field generated by the coils 23, causing the rotor 10 to rotate in response to the magnetic field. The first end cover 40 and the second end cover 50 are arranged at two ends of the heat sink 30. One sealing pad 60 of the two sealing pads 60 is arranged between the heat sink 30 and the first end cover 40, and the other sealing pad 60 of the two sealing pads 60 is arranged between the heat sink 30 and the second end cover 50.

The heat sink 30 is substantially cylindrical. The heat sink 30 is received in the magnetic core 21. The heat sink 30 defines a plurality of coolant passages 36 extending through two ends of the heat sink 30 and extending along a direction parallel with a central axis of the heat sink 30. The first end cover 40 defines a plurality of first communication slots 41 at an end surface adjacent to the heat sink 30. The first communication slots 41 are formed by inward arc-shaped smooth transition concaving. The first end cover 40 further defines a fluid inlet 43 and a fluid outlet 44. The fluid inlet 43 and the fluid outlet 44 are substantially in "L" shape. The second end cover 50 defines a plurality of second communication slots 51 at an end surface adjacent to the heat sink 30. The shape of the second communication slots 51 is similar to the shape of the first communication slots 41, and also is formed as inward arc-shaped smooth transition concaving. One end of the two adjacent coolant passages 36 aligns with the fluid inlet 43 and the fluid outlet 44, the other end of the two adjacent coolant passages 36 aligns and communicates with the two adjacent second communication slots 51 of the second end cover 50. The coolant passages 36 excepting the two coolant passages 36 aligning with the fluid inlet 43 and the fluid outlet 44, one end of each aligns and communicates with one first communication slot 41 of the first end cover 40, the other end of each aligns and communicates with one second communication slot 51 of the second end cover 50. Thus the coolant passages 36, the first communication slots 41, and the second communication slots 51 cooperatively forms a cool passage capable of introducing the coolant into the fluid inlet 43 and of being taking the coolant out from the fluid outlet 44.

The shape of the coolant supply 200 is not limited. In the embodiment, the coolant supply 200 is cuboid. The interior of the coolant supply 200 is configured to receive the coolant. The coolant supply 200 further defines a coolant supply fluid inlet 201, a coolant supply fluid outlet 203, and an injection hole 205 for injecting the coolant. The coolant supply fluid inlet 201 and the coolant supply fluid outlet 203 are configured to be coupled to the one or more water pipes 900. Thus, the coolant circulates into the coolant supply 200 via the one or more water pipes 900. The coolant supply 200 is fixed to a power device casing, is supported at a top of the power device 100, or is installed on other supporting planes.

Further referring to FIG. 9, the pump 300 includes a first end cover 301, a second end cover 303 fixed to the first end cover 301, and a drive gear (not shown) and a driven gear (not shown) received between the first end cover 301 and the second end cover 303. The drive gear and the driven gear of the sixth embodiment are same as the drive gear and the driven gear of the first embodiment. The second end cover 303 defines a receiving groove 304. The first end cover 301 is stacked on the second end cover 303 and the first end cover 301 can cover the receiving groove 304, to form a receiving room. The receiving room can be configured to receive the drive gear and the driven gear. In the embodiment, the pump 300 can be a gear pump.

The second end cover 303 defines a first communication hole 305, a second communication hole 306, a third communication hole 307, and a fourth communication hole 308. In the embodiment, the first communication hole 305 and the second communication hole 306 are formed at opposite sidewalls of the pump 300, and the first communication hole 305 communicates with the receiving groove 304, thus the coolant circulates through the first communication hole 305 to enter into the receiving groove 304. The first communication hole 305 communicates with the coolant supply fluid inlet 201 or the coolant supply fluid outlet 203 via the one or more water pipes 900, and the second communication hole 306 communicates with the coolant supply fluid inlet 201 or the coolant supply fluid outlet 203 via the one or more water pipes 900. The fluid inlet 43 and the fluid outlet 44 excepting communication with the second communication hole 306 communicates with the coolant supply fluid inlet 201 and the coolant supply fluid outlet 203 excepting communication with the first communication hole 305 via the one or more water pipes 900.

The third communication hole 307 is formed as a concavity in a middle part of a sidewall of the second end surface forming the receiving groove 304, thus the third communication hole 307 is kept away from the drive gear and the driven gear. The third communication hole 307 is substantially arc-shaped and extend through opposite end surfaces of the second end cover 303. In other embodiments, the third communication hole 307 is other than a concavity in a middle part of the sidewall of the second end surface forming the receiving groove 304, providing only that the third communication hole 307 communicates with the receiving groove 304.

The fourth communication hole 308 is also extend through end surfaces of the second end cover 303, and the fourth communication hole 308 communicates with the second communication hole 306. The fourth communication hole 308 is also substantially arc-shaped. In the embodiment, the fourth communication hole 308 is arranged to be adjacent to the second communication hole 306 and the third communication hole 307. Thus, the pump 300 forms two independent passageways. One passageway of the two independent passageways is formed by the first communication hole 305, the receiving groove 304 receiving the drive gear and the driven gear, and the third communication hole 307. The other passageway of the two independent passageways is formed by the second communication hole 306, a passage in the pump 300 communicating between the second communication hole 306 and the fourth communication hole 308, and the fourth communication hole 308. In alternative embodiments not encompassed by the wording of the claims but considered useful for understanding the invention, the passage communicating between the second communication hole 306 and the fourth communication hole 308 is other than in the pump 300, but independently arranged, for example, by employing a water pipe 900 arranged at a side of the pump 300.

The bottom of the receiving groove 304 defines a pump axle hole 309 for a drive shaft 801 passing through. The drive gear is received in the receiving groove 304, and the central axis of the drive gear coincides with the central axis of the pump axle hole 309. The drive shaft 801 is coupled to the power device 100, and extends through the drive gear and the pump 300, thus the drive shaft 801 is driven by the power device 100 to bring the drive gear to rotate. The drive gear is engaged with the driven gear, and the drive gear drives the driven gear to rotate. When a rotating direction of the drive gear or the driven gear is different, the first communication hole 305 and the second communication hole 306 act as a pump fluid inlet or a pump fluid outlet. For example, when the drive gear rotates at a first direction, the first communication hole 305 is a fluid inlet, and the second communication hole 306 is a fluid outlet, and when the drive gear rotates at a second direction reverse to the first direction, the first communication is a fluid outlet, and the second communication hole 306 is a fluid inlet.

In an alternative embodiment, the third communication hole 307 and the fourth communication hole 308 only extend through an end surface of the second end cover 303 adjacent to the supporting rod 700. In an alternative embodiment, the first communication hole 305, the second communication hole 306, the third communication hole 307, and the fourth communication hole 308 are not limited to be arranged at the position of this embodiment, and are formed at any suitable position of the pump 300. In an alternative embodiment, the first communication hole 305 and the second communication hole 306 are formed at the first end cover 301, providing only that the first communication hole 305 communicates with the receiving groove 304 and the second communication hole 306 communicates with the fourth communication hole 308. In other embodiments not encompassed by the wording of the claims but considered useful for understanding the invention, the pump 300 is not limited to being the gear wheel of this embodiment.

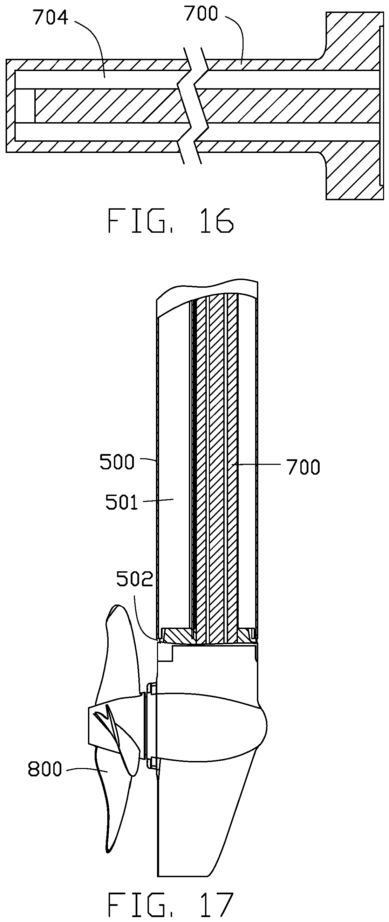

Further referring to FIG. 10 to Fig. 17, the housing 500 is substantially hollow and in shape of a rod. The housing 500 defines a receiving space 501 extending along a longitudinal axis of the housing 500. The receiving space 501 is configured to receive the bushings 600 and the supporting rod 700. The housing 500 defines a plurality of fluid inlets 502 (as shown in FIG. 17) at a part of the housing 500 adjacent to the propeller 800. The fluid inlets 502 communicates with the receiving space 501. The fluid inlets 502 are configured to provide an entrance for the water to enter into the receiving space 501 of the housing 500 when one end of the housing 500 is immersed in the water.

In the embodiment, the number of the sealing members 400 is two, and each sealing member 400 is sealing pad. One sealing member 400 is arranged between the power device 100 and the first end cover 301, and the other sealing member 400 is arranged between the second end cover 303 and the supporting rod 700. The sealing member 400 arranged between the pump 300 and the supporting rod 700 defines through holes corresponding to the third communication hole 307 and the fourth communication hole 308. In other embodiments, the sealing members 400 are not limited to being the sealing pads of the embodiment, for example are sealing greases, or the like. The number of the sealing members 400 is not limited to two, but is one, three, or more than three. When there is one

In a non-claimed alternative embodiment, the coolant supply 200 is omitted. The power device 100 communicates with the pump 300 via the water pipes 900, namely the first communication hole 305 communicates with one of the fluid inlet 43 and the fluid outlet 44 via the water pipes 900, and the second communication hole 306 communicates with the other one of the fluid inlet 43 and the fluid outlet 44 via the water pipes 900. Before operating the ship propulsion apparatus, the coolant for cooling is injected into the fluid circuit. In other embodiments, the supporting rod 700 is not limited to the positioning dictated by the bushings 600 of this embodiment.

In a non-claimed alternative embodiment, the coolant passage 704 is formed in the housing 500. At this time, the supporting rod 700 is omitted, namely, the housing 500 replaces the supporting rod 700 to act for supporting function. When the coolant passage is formed in the housing 500, an end surface of the housing 500 defines communication holes to communicate with the pump 300. The housing 500 omits the fluid inlets. The cross-section of the supporting rod 700 or the housing 500 is teardrop shape, streamlined shape, or circular.

In other embodiments, it is not limited to cool the power device 100 and the pump 300, it can also cool other components generating heat. The fluid circuit should be rearranged to circulate through other components, other components also are cooled by employing a closed circulation cooling manner.
to be U-shaped, for example, such passage 704 is a plurality of passages extending along a longitudinal axis of the supporting rod 700 and communicating with each other. In other embodiments, the shapes of fifth communication hole 702 and the sixth communication hole 703 are not limited.

The supporting rod 700 is mounted in the receiving space 501 of the housing 500. In the embodiment, the number of the bushings 600 is two. One bushing 600 is sleeved on an end of the supporting rod 700 adjacent to the pump 300, and the other bushing 600 is sleeved on another end of the supporting rod 700 adjacent to the propeller 800. The two bushings 600 are also received in the housing 500. The supporting rod 700 is positioned on the housing 500 via bushings 600. The fifth communication hole 702 of the supporting rod 700 aligns and communicates with the third communication hole 307 of the pump 300. The sixth communication hole 703 of the supporting rod 700 aligns and communicates with the fourth communication hole 308 of the pump 300. The third communication hole 307, the fourth communication hole 308, the fifth communication hole 702, and the sixth communication hole 703 are arc-shaped hole. The propeller 800 is arranged at an end of the housing 500 away from the pump 300, and is coupled to the drive shaft 801, thus the propeller 800 is driven by the power device 100 to rotate.

Thus, the coolant passages 36, the first communication slots 41, the second communication slots 51, the coolant supply 200, the pump 300, the water pipes 900, and the coolant passage 704 cooperatively form a fluid circuit. When the ship propulsion apparatus is working, the propeller 800 and an end of the housing 500 adjacent to the propeller 800 are immersed in the water, and the fluid inlets are immersed in the water. The water enters into the receiving space 501 of the housing 500 via the housing fluid inlets 502. Thus an end of the supporting rod 700 adjacent to the propeller 800 is immersed in the water of the receiving space 501. Therefore, the coolant in the coolant passage 704 is cooled, the cooled coolant in the coolant passage 704 is pumped to the pump 300 and the power device 100 along the fluid circuit, to cool the pump 300 and the power device 100, thus, an effect of closed circulation cooling is achieved.

In the embodiment, because a closed coolant circulation loop is employed and a part of the coolant passage 704 is immersed into the water to dissipate heat, the disclosure prevents from sucking the water from the external water in a process of cooling circuit, sucking corrosive fluid or fluid with much impurity is avoided, thus the service life of the ship propulsion apparatus increases.

In an alternative embodiment not encompassed by the wording of the claims but considered useful for understanding the invention, the coolant supply 200 is omitted. The power device 100 communicates with the pump 300 via the water pipes 900, namely the first communication hole 305 communicates with one of the fluid inlet 43 and the fluid outlet 44 via the water pipes 900, and the second communication hole 306 communicates with the other one of the fluid inlet 43 and the fluid outlet 44 via the water pipes 900. Before operating the ship propulsion apparatus, the coolant for cooling is injected into the fluid circuit. In other embodiments, the supporting rod 700 is not limited to the positioning dictated by the bushings 600 of this embodiment.

In an alternative embodiment, the coolant passage 704 is formed in the housing 500. At this time, the supporting rod 700 is omitted, namely, the housing 500 replaces the supporting rod 700 to act for supporting function. When the coolant passage is formed in the housing 500, an end surface of the housing 500 defines communication holes to communicate with the pump 300. The housing 500 omits the fluid inlets. The cross-section of the supporting rod 700 or the housing 500 is teardrop shape, streamlined shape, or circular.

In other embodiments, it is not limited to cool the power device 100 and the pump 300, it can also cool other components generating heat. The fluid circuit should be rearranged to circulate through other components, other components also are cooled by employing a closed circulation cooling manner.

## Claims

1. A ship propulsion apparatus (1) comprising:
a power device (100, 101);
a gear pump (4, 300), wherein the gear pump (4, 300) comprises a drive gear (91), a driven gear (92) engaged with the drive gear (91), a first end cover (301), and a second end cover (303) defining a receiving groove (304), wherein the drive gear (91) and the driven gear (92) are received in the receiving groove (304) between the first end cover (301) and the second end cover (303), the first end cover (301) being stacked on the second end cover (303);
a coolant supply (2, 200) providing a fluid as a coolant;
a supporting rod (5, 700) defining a coolant passage (8, 36, 704) that communicates with the gear pump (4, 300) in series, wherein the supporting rod (5, 700) and its coolant passage (8, 36, 704) are to be partly immersed in water when the ship propulsion apparatus (1) is working;
wherein the ship propulsion apparatus (1) defines a closed fluid circuit, the closed fluid circuit circulating the fluid provided by the coolant supply (2, 200) through rotation of the drive gear (91) and the driven gear (92) of the gear pump (4, 300), so that the fluid flows through the gear pump (4, 300), the coolant supply (2, 200) and the coolant passage (8, 36, 704) of the supporting rod (5, 700); and
wherein the gear pump (4, 300) forms two independent passageways, both independent passageways entirely contained in the gear pump (4, 300), the two independent passageways each communicate with the coolant passage (8, 36, 704) in the supporting rod (5, 700), one of the two independent passageways to pass the fluid into the supporting rod (5, 700) and the other one of the two independent passageways to receive the fluid from the supporting rod (5, 700), and one of the two independent passageways is formed through the drive gear (91) and the driven gear (92) and is at least in part formed by the receiving groove (304) of the second end cover (303).

2. The ship propulsion apparatus (1) according to claim 1, wherein the closed fluid circuit circulates through the power device (100, 101).

3. The ship propulsion apparatus (1) according to claim 1, wherein the power device (100, 101) drives the gear pump (4, 300).

4. The ship propulsion apparatus (1) according to claim 1, wherein the gear pump (4, 300) comprises a pump driver.

5. The ship propulsion apparatus (1) according to claim 1, wherein the gear pump (4, 300) communicates with the coolant supply (2, 200) in series.

6. The ship propulsion apparatus (1) according to claim 1, wherein the coolant passage (8, 36, 704) is smooth transition at an end of the coolant passage (8, 36, 704) away from the gear pump (4, 300).

7. The ship propulsion apparatus (1) according to claim 1, wherein an end surface of the supporting rod (5, 700) defines two communication holes, the two communication holes communicates with the coolant passage (8, 36, 704).

8. The ship propulsion apparatus (1) according to claim 1, wherein the ship propulsion apparatus (1) further comprises a housing (500), the housing (500) defines a receiving space (501) to receive the supporting rod (5, 700), and the housing (500) defines a plurality of water inlets communicating with the receiving space (501).

9. The ship propulsion apparatus (1) according to claim 8, wherein the cross-section of the housing (500) or the supporting rod (5, 700) is teardrop shape, streamlined shape, or circular.

10. The ship propulsion apparatus (1) according to claim 1, wherein the ship propulsion apparatus (1) further comprises a driver (3) and a battery (601), the closed fluid circuit circulates through the driver (3) and the battery (601), the battery (601) comprises a built-in battery management system.

11. The ship propulsion apparatus (1) according to claim 1, wherein the ship propulsion apparatus (1) further comprises the housing (500) arranged at an end of the gear pump (4, 300), the housing (500) defines the coolant passage (8, 36, 704), and the closed fluid circuit comprises the coolant passage (8, 36, 704).

## Patentansprüche

1. Schiffsantriebsvorrichtung (1), umfassend:
eine Antriebsvorrichtung (100, 101);
eine Getriebepumpe (4, 300), wobei die Getriebepumpe (4, 300) ein Antriebsrad (91), ein angetriebenes Rad (92), das mit dem Antriebsrad (91) in Eingriff steht, eine erste Endabdeckung (301) und eine zweite Endabdeckung (303), die eine Aufnahmeaussparung (304) definieren, umfasst, wobei das Antriebsrad (91) und das angetriebene Rad (92) in der Aufnahmeaussparung (304) zwischen der ersten Endabdeckung (301) und der zweiten Endabdeckung (303) aufgenommen sind, wobei die erste Endabdeckung (301) auf der zweiten Endabdeckung (303) angeordnet ist;
eine Kühlmittelzufuhr (2, 200), die ein Fluid als Kühlmittel bereitstellt;
eine Haltestange (5, 700), die einen Kühlmitteldurchgang (8, 36, 704) definiert, der mit der in Reihe angeordneten Getriebepumpe (4, 300) kommuniziert, wobei die Haltestange (5, 700) und ihr Kühlmitteldurchgang (8, 36, 704) teilweise in Wasser eingetaucht werden sollen, wenn die Schiffsantriebsvorrichtung (1) arbeitet;
wobei die Schiffsantriebsvorrichtung (1) einen Fluidkreislauf definiert, wobei der Fluidkreislauf das von der Kühlmittelzufuhr (2, 200) bereitgestellte Fluid durch Drehung des Antriebsrads (91) und des angetriebenen Rads (92) der Getriebepumpe (4, 300) zirkuliert, so dass das Fluid durch die Getriebepumpe (4, 300), die Kühlmittelzufuhr (2, 200) und den Kühlmitteldurchgang (8, 36, 704) der Haltestange (5, 700) strömt; und
wobei die Getriebepumpe (4, 300) zwei Durchgänge definiert, wobei die zwei Durchgänge jeweils mit dem Kühlmitteldurchgang (8, 36, 704) in der Haltestange (5, 700) in Verbindung stehen und einer der zwei Durchgänge durch das Antriebsrad (91) und das angetriebene Rad (92) gebildet wird und zumindest teilweise durch die Aufnahmeaussparung (304) der zweiten Endabdeckung (303) gebildet wird und der andere der zwei Durchgänge außerhalb der Aufnahmeaussparung (304) liegt und von dieser getrennt ist.

2. Schiffsantriebsvorrichtung (1) nach Patentanspruch 1, wobei der Fluidkreislauf durch die Antriebsvorrichtung (100, 101) zirkuliert.

3. Schiffsantriebsvorrichtung (1) nach Patentanspruch 1, wobei die Antriebsvorrichtung (100, 101) die Getriebepumpe (4, 300) antreibt.

4. Schiffsantriebsvorrichtung (1) nach Patentanspruch 1, wobei die Getriebepumpe (4, 300) einen Pumpenantrieb umfasst.

5. Schiffsantriebsvorrichtung (1) nach Patentanspruch 1, wobei die Getriebepumpe (4, 300) mit der in Reihe angeordneten Kühlmittelzufuhr (2, 200) kommuniziert.

6. Schiffsantriebsvorrichtung (1) nach Patentanspruch 1, wobei der Kühlmitteldurchgang (8, 36, 704) an einem von der Getriebepumpe (4, 300) entfernten Ende des Kühlmitteldurchgangs (8, 36, 704) einen nahtlosen Übergang aufweist.

7. Schiffsantriebsvorrichtung (1) nach Patentanspruch 1, wobei eine Endfläche der Haltestange (5, 700) zwei Kommunikationslöcher definiert, wobei die zwei Kommunikationslöcher mit dem Kühlmitteldurchgang (8, 36, 704) kommunizieren.

8. Schiffsantriebsvorrichtung (1) nach Patentanspruch 1, wobei die Schiffsantriebsvorrichtung (1) ferner ein Gehäuse (500) umfasst, wobei das Gehäuse (500) einen Aufnahmeraum (501) zur Aufnahme der Haltestange (5, 700) definiert und das Gehäuse (500) eine Mehrzahl von Wassereinlässen definiert, die mit dem Aufnahmeraum (501) kommunizieren.

9. Schiffsantriebsvorrichtung (1) nach Patentanspruch 8, wobei der Querschnitt des Gehäuses (500) oder der Haltestange (5, 700) tropfenförmig, stromlinienförmig oder kreisförmig ist.

10. Schiffsantriebsvorrichtung (1) nach Patentanspruch 1, wobei die Schiffsantriebsvorrichtung (1) ferner einen Antrieb (3) und eine Batterie (601) umfasst, wobei der Fluidkreislauf durch den Antrieb (3) und die Batterie (601) zirkuliert, wobei die Batterie (601) ein eingebautes Batteriemanagementsystem umfasst.

11. Schiffsantriebsvorrichtung (1) nach Patentanspruch 1, wobei die Schiffsantriebsvorrichtung (1) ferner das an einem Ende der Getriebepumpe (4, 300) angeordnete Gehäuse (500) umfasst, wobei das Gehäuse (500) den Kühlmitteldurchgang (8, 36, 704) definiert und der Fluidkreislauf den Kühlmitteldurchgang (8, 36, 704) umfasst.

## Revendications

1. Appareil de propulsion de navire (1) comprenant :
un dispositif d'alimentation (100, 101) ;
une pompe à engrenages (4, 300), dans lequel la pompe à engrenages (4, 300) comprend un engrenage d'entraînement (91), un engrenage mené (92) engagé avec l'engrenage d'entraînement (91), un premier flasque latéral (301) et un second flasque latéral (303) définissant une rainure de réception (304), dans lequel l'engrenage d'entraînement (91) et l'engrenage mené (92) sont reçus dans la rainure de réception (304) entre le premier flasque latéral (301) et le second flasque latéral (303), le premier flasque latéral (301) étant empilé sur le second flasque latéral (303) ;
une alimentation en réfrigérant (2, 200) qui fournit un liquide en guise de réfrigérant ;
une tige de support (5, 700) qui définit un passage de réfrigérant (8, 36, 704) qui communique avec la pompe à engrenages (4, 300) en série, dans lequel la tige de support (5, 700) et son passage de réfrigérant (8, 36, 704) doivent être partiellement immergés dans de l'eau lorsque l'appareil de propulsion de navire (1) fonctionne ;
dans lequel l'appareil de propulsion de navire (1) définit un circuit de liquide fermé, le circuit de liquide fermé faisant circuler le liquide fourni par l'alimentation en réfrigérant (2, 200) par la rotation de l'engrenage d'entraînement (91) et de l'engrenage mené (92) de la pompe à engrenages (4, 300), de sorte que le liquide circule à travers la pompe à engrenages (4, 300), l'alimentation en réfrigérant (2, 200) et le passage de réfrigérant (8, 36, 704) de la tige de support (5, 700) ; et
dans lequel la pompe à engrenages (4, 300) forme deux canaux indépendants, les deux canaux indépendants étant entièrement contenus dans la pompe à engrenages (4, 300), les deux canaux indépendants communiquant chacun avec le passage de réfrigérant (8, 36, 704) dans la tige de support (5, 700), l'un des deux canaux indépendants étant destiné à transmettre le liquide à la tige de support (5, 700) et l'autre des deux canaux indépendants étant destiné à recevoir le liquide de la part de la tige de support (5, 700), et l'un des deux canaux indépendants étant formé à travers l'engrenage d'entrainement (91) et l'engrenage mené (92) et étant au moins en partie formé par la rainure de réception (304) du second flasque latéral (303).

2. Appareil de propulsion de navire (1) selon la revendication 1, dans lequel le circuit de liquide fermé circule à travers le dispositif d'alimentation (100, 101).

3. Appareil de propulsion de navire (1) selon la revendication 1, dans lequel le dispositif d'alimentation (100, 101) entraîne la pompe à engrenages (4, 300).

4. Appareil de propulsion de navire (1) selon la revendication 1, dans lequel la pompe à engrenages (4, 300) comprend un système d'entraînement de pompe.

5. Appareil de propulsion de navire (1) selon la revendication 1, dans lequel la pompe à engrenages (4, 300) communique avec l'alimentation en réfrigérant (2, 200) en série.

6. Appareil de propulsion de navire (1) selon la revendication 1, dans lequel le passage de réfrigérant (8, 36, 704) est une transition fluide à une extrémité du passage de réfrigérant (8, 36, 704) à l'écart de la pompe à engrenages (4, 300).

7. Appareil de propulsion de navire (1) selon la revendication 1, dans lequel une surface d'extrémité de la tige de support (5, 700) définit deux orifices de communication, les deux orifices de communication communiquant avec le passage de réfrigérant (8, 36, 704).

8. Appareil de propulsion de navire (1) selon la revendication 1, dans lequel l'appareil de propulsion de navire (1) comprend en outre une enceinte (500), l'enceinte (500) définissant un espace de réception (501) destiné à recevoir la tige de support (5, 700), et l'enceinte (500) définissant une pluralité d'admissions d'eau qui communiquent avec l'espace de réception (501).

9. Appareil de propulsion de navire (1) selon la revendication 8, dans lequel la section transversale de l'enceinte (500) ou de la tige de support (5, 700) est en forme de larme, fuselée ou circulaire.

10. Appareil de propulsion de navire (1) selon la revendication 1, dans lequel l'appareil de propulsion de navire (1) comprend en outre un système d'entraînement (3) et une batterie (601), le circuit de liquide fermé circule à travers le système d'entraînement (3) et la batterie (601), et la batterie (601) comprend un système de gestion de batterie intégré.

11. Appareil de propulsion de navire (1) selon la revendication 1, dans lequel l'appareil de propulsion de navire (1) comprend en outre l'enceinte (500) prévue à une extrémité de la pompe à engrenages (4, 300), l'enceinte (500) définit le passage de réfrigérant (8, 36, 704), et le circuit de liquide fermé comprend le passage de réfrigérant (8, 36, 704).
